# EUROPÄISCHE PATENTSCHRIFT

(11) **EP 3 620 260 B1**
(45) Veröffentlichungstag und Bekanntmachung des Hinweises auf die Patenterteilung: **06.03.2024**
(21) Anmeldenummer: 19192091.7
(22) Anmeldetag: 16.08.2019
(51) Int. Cl.: B23Q 1/00, B23Q 3/10

(54) **AUSGLEICHSVORRICHTUNG ZUM AUSGLEICHEN EINER POSITIONIERUNGSTOLERANZ**
COMPENSATION DEVICE FOR COMPENSATING FOR A POSITIONING TOLERANCE
DISPOSITIF COMPENSATEUR PERMETTANT DE COMPENSER UNE TOLÉRANCE DE POSITIONNEMENT

(30) Priorität: 07.09.2018 DE 102018121833
(43) Veröffentlichungstag der Anmeldung: 11.03.2020
(73) Patentinhaber: Andreas Maier GmbH & Co. KG, 70734 Fellbach (DE)
(72) Erfinder: Dietterle, Martin, 71384 Weinstadt (DE); Trebes, Herbert, 73614 Schorndorf (DE)
(74) Vertreter: Hoeger, Stellrecht & Partner Patentanwälte mbB

(56) Entgegenhaltungen:
- EP-A1- 3 243 599
- WO-A1-93/10940
- CN-A- 106 425 631
- DE-A1-102010 037 547

## Beschreibung

Die vorliegende Erfindung betrifft das technische Gebiet von Arbeitsvorrichtungen, beispielsweise Spannvorrichtungen, welche zur Durchführung eines Bearbeitungsvorgangs an einem Werkstück oder an mehreren Werkstücken relativ zu einem Untergrund, beispielsweise relativ zu einem Maschinentisch oder einer Spannplatte, möglichst präzise positioniert werden müssen.

Wenn es sich bei einer solchen Arbeitsvorrichtung beispielsweise um eine Spannvorrichtung handelt, die eine Aufnahme aufweist, in welcher ein Einzugsnippel, der an einem Werkstück oder an einer Werkstückpalette angeordnet ist, verriegelt werden kann, so kann es aufgrund von Positionierungstoleranzen der Einzugsnippel an der Werkstückpalette beziehungsweise an dem Werkstück und/oder aufgrund von Positionierungstoleranzen von mehreren solcher Spannvorrichtungen relativ zu dem Untergrund vorkommen, dass die Relativpositionen der Einzugsnippel an der Werkstückpalette beziehungsweise an dem Werkstück einerseits und die Relativpositionen der Aufnahmen der mehreren Spannvorrichtungen andererseits so weit voneinander abweichen, dass nicht alle Einzugsnippel gleichzeitig in die jeweils zugeordnete Aufnahme einer Spannvorrichtung eingeführt werden können.

Die EP 3 243 599 A1 und die DE 10 2010 037547 A1 offenbaren Ausgleichsvorrichtungen gemäß dem Oberbegriff von Anspruch 1.

Der vorliegenden Erfindung liegt die Aufgabe zugrunde, solche Positionstoleranzen einer zu positionierenden Arbeitsvorrichtung ausgleichen zu können.

Diese Aufgabe wird durch eine Ausgleichsvorrichtung zum Ausgleichen einer Positionierungstoleranz einer zu positionierenden Arbeitsvorrichtung nach Anspruch 1 gelöst.

Dabei kann die Arbeitsvorrichtung beispielsweise als eine Spannvorrichtung, insbesondere als eine Schnellspannvorrichtung, besonders bevorzugt als eine Nullpunkt-Schnellspannvorrichtung, ausgebildet sein.

Eine solche Spannvorrichtung kann insbesondere eine Aufnahme für jeweils einen Einzugsnippel und eine Verriegelungsvorrichtung zum Verriegeln des jeweiligen Einzugsnippels in der Aufnahme aufweisen.

Dabei kann eine Betätigung der Verriegelungsvorrichtung der Spannvorrichtung beispielsweise mechanisch, pneumatisch oder hydraulisch erfolgen.

Bei einer bevorzugten Ausgestaltung der Erfindung ist vorgesehen, dass der Träger längs mindestens zwei senkrecht zueinander ausgerichteten, zusammen eine Verschiebeebene aufspannenden Verschieberichtungen relativ zu der Basis verschiebbar ist.

Die Arretiervorrichtung umfasst eine Klemmvorrichtung zum Verklemmen des Trägers an der Basis.

Die Klemmvorrichtung umfasst mindestens ein Keilelement.

Dabei weist vorzugsweise mindestens ein Keilelement mindestens eine Keilfläche mit einem Keilwinkel von weniger als 10°, insbesondere von weniger als 8°, besonders bevorzugt von weniger als 6°, auf.

Der Keilwinkel a ist dabei der Winkel, unter welchem die Keilfläche gegenüber einer Bewegungsrichtung des Keilelements und/oder gegenüber einer Verschiebeebene, längs welcher der Träger relativ zu der Basis der Ausgleichsvorrichtung verschiebbar ist, geneigt ist.

Die Klemmvorrichtung umfasst vorzugsweise eine Bewegungsvorrichtung zum Erzeugen einer linearen Bewegung mindestens eines Keilelements.

Eine solche Bewegungsvorrichtung kann insbesondere eine Wandlungsvorrichtung zum Wandeln einer Drehbewegung eines Betätigungselements in eine lineare Bewegung mindestens eines Keilelements umfassen.

Ergänzend oder alternativ hierzu kann vorgesehen sein, dass die Klemmvorrichtung eine pneumatische, hydraulische oder elektromotorische Bewegungsvorrichtung zum Erzeugen einer linearen Bewegung mindestens eines Keilelements umfasst.

Eine pneumatische oder hydraulische Bewegungsvorrichtung kann insbesondere einen mit dem jeweils zugeordneten Keilelement gekoppelten Kolben umfassen, welcher in einem mit einem Druckfluid beaufschlagbaren Zylinder verschieblich geführt ist.

Bei einer bevorzugten Ausgestaltung der Erfindung umfasst die Ausgleichsvorrichtung ein Fußteil, mittels welchem die Ausgleichsvorrichtung an einem Untergrund, beispielsweise an einem Maschinentisch oder an einer Spannplatte, festlegbar ist.

Der Untergrund, insbesondere der Maschinentisch oder die Spannplatte, weist vorzugsweise mindestens eine T-Nut, besonders bevorzugt mehrere T-Nuten, auf.

Der Fußteil kann einstückig mit einem Grundkörper der Basis der Ausgleichsvorrichtung ausgebildet oder als ein von dem Grundkörper der Basis separat hergestelltes Bauteil ausgebildet sein.

Der Fußteil kann mindestens einen, vorzugsweise zwei oder mehr, Führungskanäle aufweisen.

Ein solcher Führungskanal kann dazu dienen, ein Verankerungselement, mittels welchem der Fußteil an einem Untergrund, beispielsweise an einem Maschinentisch oder an einer Spannplatte, verankerbar ist, relativ zu der Basis der Ausgleichsvorrichtung verschiebbar zu führen.

Ein solcher Führungskanal kann gekrümmt, insbesondere kreisbogenförmig gekrümmt, ausgebildet sein.

Bei einer bevorzugten Ausgestaltung der Erfindung ist vorgesehen, dass die Basis einen Grundkörper umfasst, welcher eine zumindest abschnittsweise im Wesentlichen zylindrische Umfangsfläche aufweist.

Die Ausgleichsvorrichtung umfasst vorzugsweise mindestens ein Klammerelement, besonders bevorzugt zwei oder mehr Klammerelemente, zwischen denen ein Bereich des Trägers und ein Bereich der Basis und gegebenenfalls ein oder mehrere weitere Elemente, beispielsweise ein Keilelement, der Ausgleichsvorrichtung angeordnet sind.

Insbesondere kann vorgesehen sein, dass der Träger und die Basis durch eine Bewegung des mindestens einen Keilelements relativ zu dem Klammerelement und/oder relativ zu der Basis gegeneinander verklemmbar sind.

Die Ausgleichsvorrichtung umfasst mindestens einen Zugbolzen und eine daran angeordnete Mutter zum Verklemmen von Träger und Basis.

Der Träger weist mindestens eine Aufnahmebohrung auf, in welcher der Zugbolzen mit Spiel aufgenommen ist. Dieses Spiel ermöglicht es, den Träger relativ zu der Basis der Ausgleichsvorrichtung zu verschieben, wenn die Ausgleichsvorrichtung sich in einem geöffneten Zustand befindet.

Die Befestigungseinrichtung zum Befestigen der Arbeitsvorrichtung an dem Träger kann mindestens ein Gewindeloch, vorzugsweise zwei oder mehr Gewindelöcher, umfassen.

Vorzugsweise weist der Träger eine im Wesentlichen ebene Anlagefläche zum Anlegen der Arbeitsvorrichtung an dem Träger auf.

Die erfindungsgemäße Ausgleichsvorrichtung eignet sich insbesondere zur Verwendung in einer Kombination aus einer erfindungsgemäßen Ausgleichsvorrichtung und einer an dem Träger befestigbaren oder befestigten Arbeitsvorrichtung.

Dabei kann insbesondere vorgesehen sein, dass die Arbeitsvorrichtung eine Spannvorrichtung zum Einspannen eines Werkstücks oder einer Werkstückpalette ist.

Die erfindungsgemäße Ausgleichsvorrichtung eignet sich ferner zur Verwendung in einer Kombination aus mehreren Arbeitsvorrichtungen und mindestens einer Ausgleichsvorrichtung.

Dabei ist vorzugsweise mindestens eine der Arbeitsvorrichtungen an dem Träger der Ausgleichsvorrichtung befestigbar oder befestigt.

Eine solche Kombination kann ferner ein Werkstück oder eine Werkstückpalette umfassen, wobei das Werkstück beziehungsweise die Werkstückpalette an jede der mehreren Arbeitsvorrichtungen angekoppelt ist.

Insbesondere kann vorgesehen sein, dass das Werkstück beziehungsweise die Werkstückpalette mit mehreren Einzugsnippeln versehen ist, wobei das Werkstück beziehungsweise die Werkstückpalette an jede der mehreren Arbeitsvorrichtungen, welche insbesondere als Spannvorrichtungen ausgebildet sind, durch Verriegeln jeweils eines Einzugsnippels an der betreffenden Arbeitsvorrichtung, insbesondere Spannvorrichtung, angekoppelt ist.

Nach dem Ankoppeln des Werkstücks beziehungsweise der Werkstückpalette an die mehreren Arbeitsvorrichtungen kann ein Bearbeitungsvorgang, beispielsweise eine spanende Bearbeitung, an dem Werkstück oder an einem oder mehreren Werkstücken, die an der Werkstückpalette angeordnet sind, durchgeführt werden.

Mittels der erfindungsgemäßen Ausgleichsvorrichtung können größere Positionstoleranzen ausgeglichen werden.

Die Ausgleichsvorrichtung kann in einen geöffneten Zustand überführt werden, in welchem der Träger längs einer oder mehrerer Verschieberichtungen (X-Richtung, Y-Richtung) relativ zu der Basis in eine Arbeitsposition verschiebbar ist.

Nach dem Einstellen der Arbeitsposition ist die Ausgleichsvorrichtung in einen gespannten Zustand überführbar, in welchem der Träger in der Arbeitsposition an der Basis arretiert ist, so dass der Träger sich nicht mehr relativ zu der Basis verschieben kann.

Die Betätigung der Ausgleichsvorrichtung, insbesondere die Überführung der Ausgleichsvorrichtung von dem gespannten Zustand in den geöffneten Zustand und/oder von dem geöffneten Zustand in den gespannten Zustand, kann mechanisch mittels eines geeigneten Werkzeugs, beispielsweise mittels eines Drehmomentschlüssels, erfolgen.

Alternativ hierzu kann vorgesehen sein, dass die Überführung der Ausgleichsvorrichtung von dem gespannten Zustand in den geöffneten Zustand und/oder von dem geöffneten Zustand in den gespannten Zustand pneumatisch oder hydraulisch unter Verwendung eines Zylinders, der mit einem Druckfluid beaufschlagt wird, erfolgt.

Die Ausgleichsvorrichtung kann einen oder mehrere Zugbolzen aufweisen, mittels welcher der Träger und die Basis gegeneinander verklemmbar sind.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine perspektivische Darstellung eines Maschinentisches mit T-Nuten, an dem vier Arbeitsvorrichtungen über jeweils einen Sockel angeordnet sind, wobei einer der Sockel als eine Ausgleichsvorrichtung zum Ausgleich einer Positionierungstoleranz der daran angeordneten Arbeitsvorrichtung ausgebildet ist;
- Fig. 2: eine Explosionsdarstellung der Ausgleichsvorrichtung, mit der Blickrichtung auf die einer Anlagefläche der Ausgleichsvorrichtung, an welche die Arbeitsvorrichtung anlegbar ist, zugewandten Oberseiten der verschiedenen Elemente der Ausgleichsvorrichtung;
- Fig. 3: eine Explosionsdarstellung der Ausgleichsvorrichtung aus Fig. 2, mit der Blickrichtung auf die der Anlagefläche für die Arbeitsvorrichtung abgewandten Unterseiten der verschiedenen Elemente der Ausgleichsvorrichtung;
- Fig. 4: eine perspektivische Darstellung eines Grundkörpers einer Basis der Ausgleichsvorrichtung und eines Keilelements der Ausgleichsvorrichtung;
- Fig. 5: einen Querschnitt durch die Ausgleichsvorrichtung in einem geöffneten Zustand der Ausgleichsvorrichtung, in welchem ein Träger der Ausgleichsvorrichtung längs einer Verschiebeebene relativ zu einer Basis der Ausgleichsvorrichtung verschiebbar ist;
- Fig. 6: einen Querschnitt durch die Ausgleichsvorrichtung in einem gespannten Zustand der Ausgleichsvorrichtung, in welchem der Träger der Ausgleichsvorrichtung in einer Arbeitsposition relativ zu der Basis der Ausgleichsvorrichtung arretiert ist;
- Fig. 7: einen Querschnitt durch den Grundkörper und das Keilelement aus Fig. 4, in dem geöffneten Zustand der Ausgleichsvorrichtung;
- Fig. 8: einen Querschnitt durch den Grundkörper und das Keilelement aus Fig. 4, in dem gespannten Zustand der Ausgleichsvorrichtung;
- Fig. 9: einen Querschnitt durch die Ausgleichsvorrichtung, parallel zu einer Bewegungsrichtung des Keilelements (X-Richtung), in einem gespannten Zustand der Ausgleichsvorrichtung, wobei der Träger sich in einer Arbeitsposition befindet, in welcher er relativ zu der Basis längs der Bewegungsrichtung des Keilelements (X-Richtung) maximal zu einem Betätigungselement der Ausgleichsvorrichtung hin verschoben ist;
- Fig. 10: einen der Fig. 9 entsprechenden Querschnitt durch die Ausgleichsvorrichtung parallel zu der Bewegungsrichtung des Keilelements (X-Richtung) im gespannten Zustand der Ausgleichsvorrichtung, wobei der Träger sich in einer Arbeitsposition befindet, in welcher er relativ zu der Basis längs der Bewegungsrichtung des Keilelements (X-Richtung) maximal von dem Betätigungselement weg verschoben ist;
- Fig. 11: einen Querschnitt durch die Ausgleichsvorrichtung, parallel zu einer senkrecht zu der Bewegungsrichtung des Keilelements (X-Richtung) ausgerichteten Y-Richtung der Ausgleichsvorrichtung, in einem gespannten Zustand der Ausgleichsvorrichtung, wobei der Träger sich in einer Arbeitsposition relativ zu der Basis befindet, in welcher der Träger relativ zu der Basis längs der Y-Richtung maximal nach rechts verschoben ist;
- Fig. 12: einen der Fig. 11 entsprechenden Querschnitt durch die Ausgleichsvorrichtung, parallel zu der senkrecht zur Bewegungsrichtung des Keilelements (X-Richtung) ausgerichteten Y-Richtung, im gespannten Zustand der Ausgleichsvorrichtung, wobei der Träger sich in einer Arbeitsposition relativ zu der Basis befindet, in welcher der Träger relativ zu der Basis längs der Y-Richtung maximal nach links verschoben ist;
- Fig. 13: eine Draufsicht von oben auf die Ausgleichsvorrichtung; und
- Fig. 14: einen Querschnitt durch die Ausgleichsvorrichtung längs einer zwischen der X-Richtung und der Y-Richtung liegenden Diagonal-richtung, welche in Fig. 13 durch die Linie 14 - 14 angezeigt ist.

Gleiche oder funktional äquivalente Elemente sind in allen Figuren mit denselben Bezugszeichen bezeichnet.

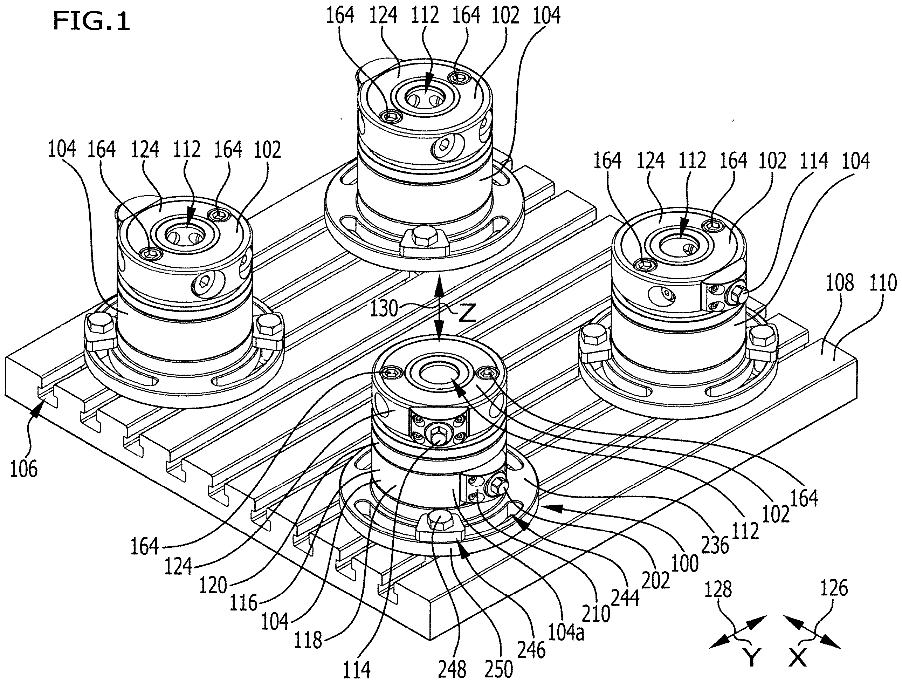

Eine in Fig. 1 dargestellte, als Ganzes mit 100 bezeichnete Spannbaugruppe umfasst mehrere, vorzugsweise zwei oder mehr, beispielsweise vier, Spannvorrichtungen 102, welche jeweils über einen Sockel 104 an einem mit T-Nuten 106 versehenen Untergrund 108, beispielsweise einem Maschinentisch 110 oder einer Spannplatte, gehalten sind.

Jede der Spannvorrichtungen 102 ist vorzugsweise als eine Schnellspannvorrichtung, insbesondere als eine Nullpunkt-Schnellspannvorrichtung, ausgebildet.

Jede Spannvorrichtung 102 kann insbesondere eine Aufnahme 112 für jeweils einen (nicht dargestellten) Einzugsnippel und eine Verriegelungsvorrichtung zum Verriegeln des jeweiligen Einzugsnippels in der Aufnahme 112 aufweisen.

Bei den in Fig. 1 zeichnerisch dargestellten Spannvorrichtungen 102 ist die Verriegelungsvorrichtung der jeweiligen Spannvorrichtung 102 mechanisch, durch Drehen einer Betätigungsschraube 114, von einer Verriegelungsstellung, in welcher der jeweilige Einzugsnippel in der Aufnahme 112 der jeweiligen Spannvorrichtung 102 verriegelt ist, in eine Entriegelungsstellung, in welcher der Einzugsnippel aus der Aufnahme 112 entnehmbar ist, und/oder von der Entriegelungsstellung in die Verriegelungsstellung überführbar.

Alternativ hierzu kann aber auch vorgesehen sein, dass die Betätigung der Verriegelungsvorrichtung der jeweiligen Spannvorrichtung 102 pneumatisch oder hydraulisch erfolgt.

Die Einzugsnippel, welche in die Aufnahmen 112 der mehreren Spannvorrichtungen 102 eingeführt werden, sind vorzugsweise an derselben (nicht dargestellten) Werkstückpalette oder an demselben (nicht dargestellten) einzuspannenden Werkstück befestigt.

Aufgrund von Positionierungstoleranzen der Einzugsnippel an der Werkstückpalette beziehungsweise an dem Werkstück und/oder aufgrund von Positionierungstoleranzen der Sockel 104 der Spannvorrichtung 102 an dem Untergrund 108 kann es vorkommen, dass die Relativpositionen der Einzugsnippel an der Werkstückpalette beziehungsweise an dem Werkstück einerseits und die Relativpositionen der Aufnahmen 112 der Spannvorrichtungen 102 andererseits so weit voneinander abweichen, dass nicht alle Einzugsnippel gleichzeitig in die jeweils zugeordnete Aufnahme 112 einer Spannvorrichtung 102 eingeführt werden können.

Um solche Positionstoleranzen ausgleichen zu können und ein Einspannen der Werkstückpalette beziehungsweise des Werkstücks an der Spannbaugruppe 100 zu ermöglichen, ist mindestens ein Sockel 104 der Spannbaugruppe 100 als eine Ausgleichsvorrichtung 116 zum Ausgleich einer Positionierungstoleranz der an der Ausgleichsvorrichtung 116 anzuordnenden Spannvorrichtung 102 ausgebildet.

Dabei kann es sich beispielsweise um die in Fig. 1 an der dem Betrachter zugewandten Ecke des Maschinentisches 110 angeordneten Sockel 104a handeln.

Grundsätzlich ist aber auch möglich, dass zwei oder mehr Sockel 104 der Spannbaugruppe 100, insbesondere auch alle Sockel 104 der Spannbaugruppe 100, als jeweils eine solche Ausgleichsvorrichtung 116 ausgebildet sind.

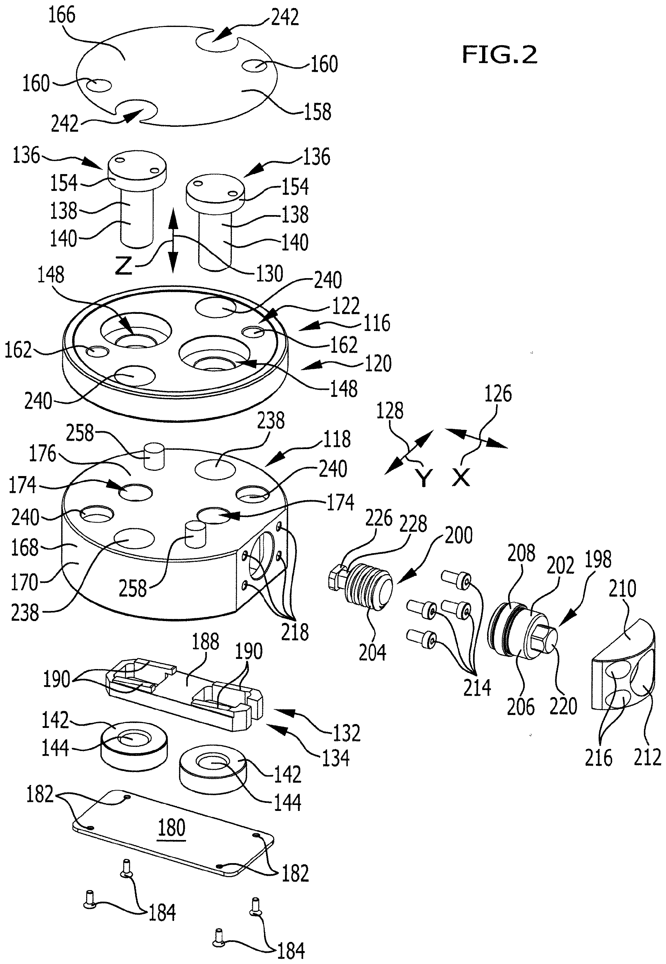

Aufbau und Funktionsweise einer solchen Ausgleichsvorrichtung 116 werden im Folgenden unter Bezugnahme auf die Fig. 2 bis 14 beschrieben.

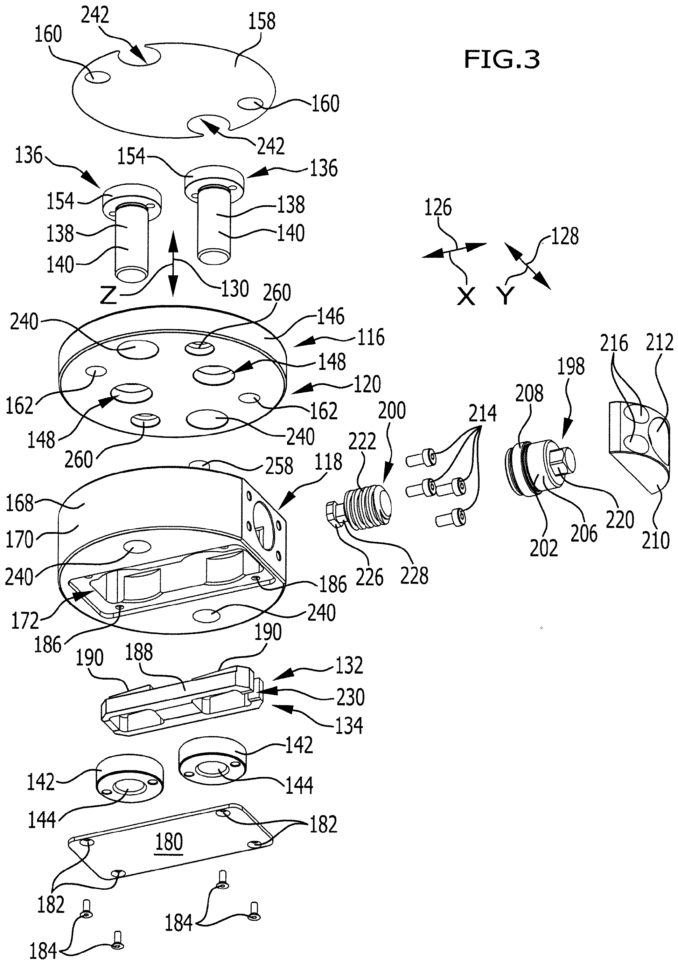

Wie am besten aus den Explosionsdarstellungen der Fig. 2 und 3 zu ersehen ist, umfasst die Ausgleichsvorrichtung 116 eine Basis 118 und einen Träger 120, wobei der Träger 120 eine Befestigungseinrichtung 122 zum Befestigen einer Arbeitsvorrichtung 124, beispielsweise einer Spannvorrichtung 102, an dem Träger 120 umfasst und der Träger 120 längs einer ersten Verschieberichtung 126 (X-Richtung) und einer senkrecht zu der ersten Verschieberichtung 126 ausgerichteten zweiten Verschieberichtung 128 (Y-Richtung) relativ zu der Basis 118 verschiebbar an der Basis 118 gehalten ist.

Die erste Verschieberichtung 126 (X-Richtung) und die zweite Verschieberichtung 128 (Y-Richtung) sind vorzugsweise beide senkrecht zu einer Achsenrichtung 130 (Z-Richtung) der Ausgleichsvorrichtung 116 ausgerichtet und spannen zusammen eine Verschiebeebene (X-Y-Ebene) auf, längs welcher der Träger 120 relativ zu der Basis 118 verschiebbar ist.

Die Ausgleichsvorrichtung 116 umfasst ferner eine Arretiervorrichtung 132 zum Arretieren des Trägers 120 in einer gewünschten Arbeitsposition relativ zu der Basis 118.

Dabei ist die Arretiervorrichtung 132 als eine Klemmvorrichtung 134 zum Verklemmen des Trägers 120 an der Basis 118 ausgebildet.

Im zeichnerisch dargestellten Ausführungsbeispiel umfasst die Klemmvorrichtung 134 ein oder mehrere Klammerelemente 136, wobei jedes Klammerelement 136 beispielsweise einen Zugbolzen 138 und eine in ein Außengewinde 140 des Zugbolzens 138 eingreifende Mutter 142 mit einem zu dem Außengewinde 140 des Zugbolzens 138 komplementär ausgebildeten Innengewinde 144 umfasst.

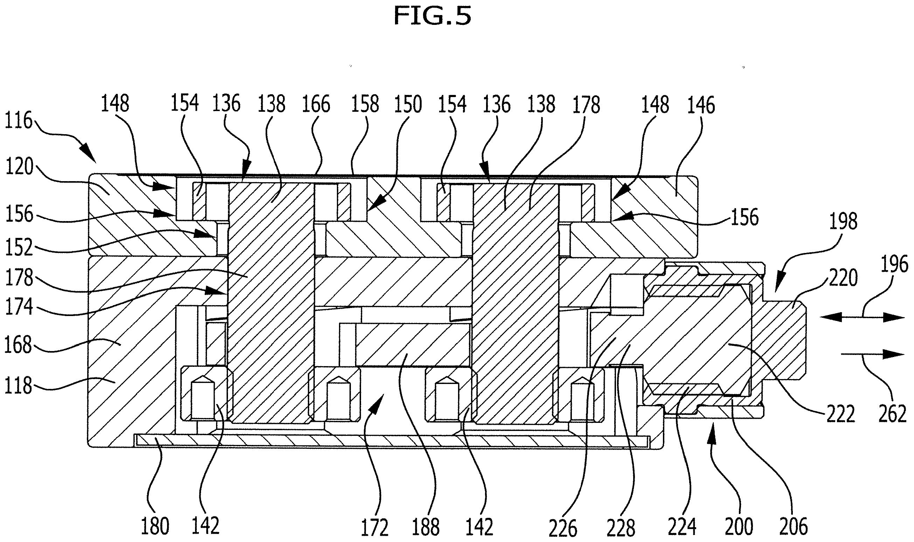

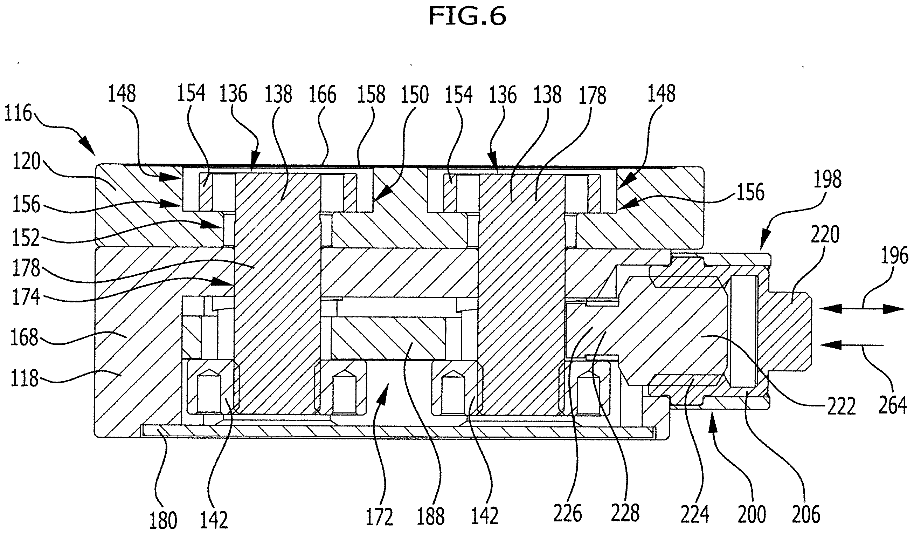

Wie am besten aus den Schnittdarstellungen der Fig. 5 und 6 zu ersehen ist, umfasst der Träger 120 eine Trägerscheibe 146, welche für jeden Zugbolzen 138 jeweils eine demselben zugeordnete gestufte Aufnahmebohrung 148 aufweist.

Die Aufnahmebohrung 148 umfasst einen oberen Abschnitt 150 größeren Durchmessers und einen unteren Abschnitt 152 kleineren Durchmessers.

Der Bolzenkopf 154 des jeweiligen Zugbolzens 138 liegt im (in Fig. 6 dargestellten) gespannten Zustand der Ausgleichsvorrichtung 116 an einer Stufe 156 an, an welcher der obere Abschnitt 150 in den unteren Abschnitt 152 der Aufnahmebohrung 148 übergeht.

Hier und im Folgenden wird mit "oben" jeweils die der von der Ausgleichsvorrichtung 116 zu tragenden Arbeitsvorrichtung 124 zugewandte Seite der Ausgleichsvorrichtung 116 bezeichnet, während mit "unten" die der von der Ausgleichsvorrichtung 116 zu tragenden Arbeitsvorrichtung 124 abgewandte Seite der Ausgleichsvorrichtung 116 bezeichnet wird.

Grundsätzlich kann die Arbeitsvorrichtung 124 aber in jeder Lage relativ zur Vertikalen an der Ausgleichsvorrichtung 116 festgelegt werden, also insbesondere über, unter oder seitlich neben der Ausgleichsvorrichtung 116.

Die Aufnahmebohrung 148 ist an ihrer Oberseite mittels einer Abdeckung 158 abgedeckt.

Die Abdeckung 158 weist eine oder mehrere Befestigungsmittel-Durchtrittsöffnungen 160 auf, welche mit jeweils einem Gewindeloch 162 in der Trägerscheibe 146 fluchten.

In die Gewindelöcher 162 können Befestigungsschrauben 164, welche die Spannvorrichtung 102 durchsetzen (siehe Fig. 1) eingeschraubt werden, um die Spannvorrichtung 102 an dem Träger 120 festzulegen, wobei die Spannvorrichtung 102 an einer durch die Oberseite der Abdeckung 158 gebildeten Anlagefläche 166 der Ausgleichsvorrichtung 116 anliegt.

Die Gewindelöcher 162 und die Befestigungsmittel-Durchtrittsöffnungen 160 der Abdeckung 158 bilden somit Bestandteile der Befestigungseinrichtung 122 der Ausgleichsvorrichtung 116.

Die Trägerscheibe 146 ist vorzugsweise im Wesentlichen zylindrisch ausgebildet.

Die Basis 118 der Ausgleichsvorrichtung 116 umfasst einen Grundkörper 168, welcher vorzugsweise eine zylindrische Umfangsfläche 170 aufweist, deren Durchmesser vorzugsweise im Wesentlichen mit dem Durchmesser der Trägerscheibe 146 übereinstimmt.

Der Grundkörper 168 ist an seiner Unterseite mit einer Ausnehmung 172 versehen, in welche zwei Bolzen-Durchtrittsöffnungen 174 münden, welche sich von einer im Wesentlichen ebenen Oberseite 176 des Grundkörpers 168 aus längs der Achsenrichtung 130 (Z-Richtung) der Ausgleichsvorrichtung 116 nach unten erstrecken.

In jeder dieser Bolzen-Durchtrittsöffnungen 174 ist ein Schaft 178 eines jeweils zugeordneten Zugbolzens 138 im Wesentlichen spielfrei geführt.

Die jeweils auf das Außengewinde 140 am unteren Ende des Schaftes 178 aufgeschraubte Mutter 142 ist innerhalb der Ausnehmung 172 des Grundkörpers 168 aufgenommen.

Nach unten hin ist die Ausnehmung 172 mittels eines Deckels 180 verschlossen, welcher beispielsweise durch Verschraubung an dem Grundkörper 168 gehalten sein kann.

Zu diesem Zweck kann der Deckel 180 eine oder mehrere Schrauben-Durchtrittsöffnungen 182 aufweisen, durch welche sich jeweils eine Schraube 184 in ein jeweils zugeordnetes Gewindeloch 186 des Grundkörpers 168 hinein erstreckt.

In der Ausnehmung 172 der Basis 118 ist ferner ein Keilelement 188 angeordnet, welches eine oder mehrere keilelementseitige Keilflächen 190 aufweist.

Jede der keilelementseitigen Keilflächen 190 ist im montierten Zustand der Ausgleichsvorrichtung 116 gegenüber der von der ersten Verschieberichtung 126 (X-Richtung) und der zweiten Verschieberichtung 128 (Y-Richtung) aufgespannten Verschiebeebene (X-Y-Ebene) um einen kleinen spitzen Winkel α geneigt, wobei α vorzugsweise kleiner ist als 10°, insbesondere kleiner als 8°, besonders bevorzugt kleiner als 6°.

Insbesondere kann vorgesehen sein, dass α ungefähr 5° (mit einer Toleranz von +/- 30 Minuten) beträgt.

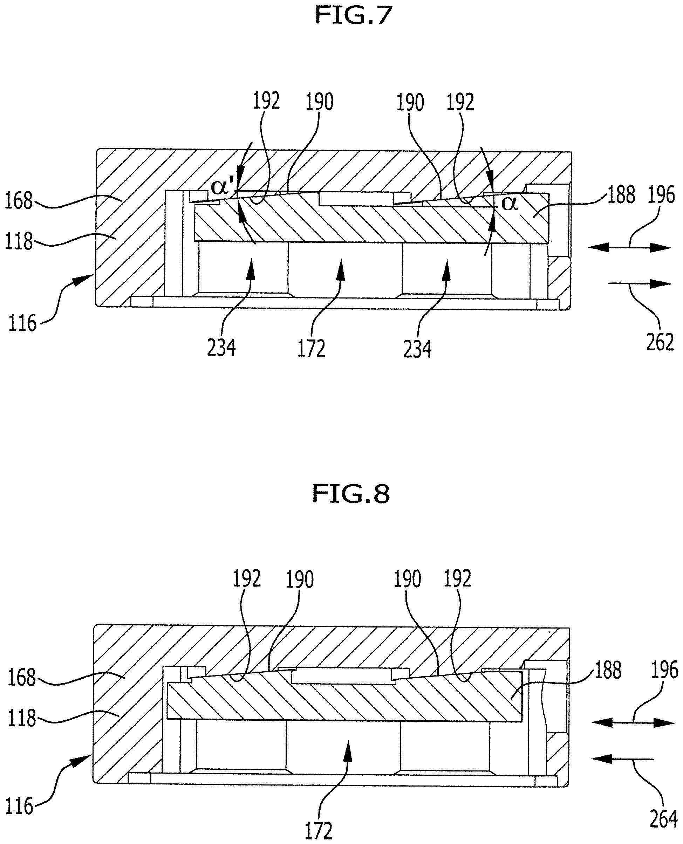

Wie am besten aus den Fig. 7 und 8 zu ersehen ist, welche einen Querschnitt durch den Grundkörper 168 der Basis 118 und das Keilelement 188 zeigen, wirkt jede der keilelementseitigen Keilflächen 190 mit jeweils einer derselben zugeordneten basisseitigen Keilfläche 192 zusammen, welche vorzugsweise an einer Oberseite der Ausnehmung 172 in dem Grundkörper 168 der Basis 118 angeordnet ist.

Jede der basisseitigen Keilflächen 192 ist gegenüber der von der ersten Verschieberichtung 126 (X-Richtung) und der zweiten Verschieberichtung 128 (Y-Richtung) aufgespannten Verschiebeebene (X-Y-Ebene) der Ausgleichsvorrichtung 116 um im Wesentlichen denselben Winkel α geneigt wie die jeweils zugeordnete keilelementseitige Keilfläche 190.

Insbesondere beträgt auch der Keilwinkel α' der basisseitigen Keilflächen 192 vorzugsweise weniger als 10°, insbesondere weniger als 8°, besonders bevorzugt weniger als 6°.

Beispielsweise kann der Keilwinkel α' der basisseitigen Keilflächen 192 ungefähr 5° (mit einer Toleranz von beispielsweise +/- 30 Minuten) betragen.

Jeweils eine keilelementseitige Keilfläche 190 und eine basisseitige Keilfläche 192 liegen vorzugsweise im Wesentlichen flächig aneinander an und können aneinander abgleiten, wenn das Keilelement 180 relativ zu der Basis 118 von der in Fig. 7 dargestellten geöffneten Stellung in die in Fig. 8 dargestellte gespannte Stellung oder von der gespannten Stellung in die geöffnete Stellung überführt wird.

Wie am besten aus den Fig. 2 und 3 sowie aus den Schnittdarstellungen der Fig. 5 und 6 zu ersehen ist, weist das Keilelement 188 für jedes Klammerelement 136 jeweils eine Durchtrittsöffnung 194 auf, durch welche sich der Schaft 178 des Zugbolzens 138 des betreffenden Klammerelements 136 hindurcherstreckt.

Auf einander gegenüberliegenden Seiten jedes Klammerelements 136 ist vorzugsweise jeweils ein Paar von keilelementseitigen Keilflächen 190 und ein Paar von mit diesen keilelementseitigen Keilflächen 190 zusammenwirkenden basisseitigen Keilflächen 192 vorgesehen.

Zum Erzeugen einer linearen Bewegung des Keilelements 188 längs einer Bewegungsrichtung 196 des Keilelements 188, welche beispielsweise mit der ersten Verschieberichtung 126 (X-Richtung) der Ausgleichsvorrichtung 116 übereinstimmen kann, relativ zu der Basis 118 umfasst die Klemmvorrichtung 134 eine Bewegungsvorrichtung 198.

Die Bewegungsvorrichtung 198 umfasst ihrerseits eine Wandlungsvorrichtung 200 zum Wandeln einer Drehbewegung eines Betätigungselements 202 in eine lineare Bewegung eines Mitnehmerelements 204, welches drehfest mit dem Keilelement 188 verbunden ist, und somit in eine lineare Bewegung des Keilelements 188.

Das Betätigungselement 202 umfasst eine Gewindehülse 206 mit einem Ringbund 208, welche durch einen Aufsatz 210 an dem Grundkörper 168 der Basis 118 gesichert ist, wobei die Gewindehülse 206 in einer Durchtrittsbohrung 212 des Aufsatzes 210 um ihre Längsachse drehbar gelagert ist und der Ringbund 208 eine Hinterschneidung bildet, welche das Betätigungselement 202 in einer Position zwischen dem Grundkörper 168 und dem Aufsatz 210 zurückhält.

Der Aufsatz 210 kann mittels einer oder mehrerer Schrauben 214, welche jeweils eine Schrauben-Durchtrittsöffnung 216 an dem Aufsatz 210 durchsetzen und in ein jeweils zugeordnetes Gewindeloch 218 an dem Grundkörper 168 eingeschraubt sind, an dem Grundkörper 168 festgelegt sein.

An seiner nach außen weisenden Stirnseite weist das Betätigungselement 202 einen Betätigungskopf 220 auf, an dem eine Bedienungsperson mittels eines geeigneten Werkzeugs angreifen kann, um das Betätigungselement 202 um seine Längsachse zu drehen.

Der Betätigungskopf 220 kann beispielsweise einen polygonalen Querschnitt aufweisen und ist beispielsweise als ein Sechskant ausgebildet.

Wie am besten aus den Schnittdarstellungen der Fig. 5 und 6 zu ersehen ist, steht ein Gewindeabschnitt 222 des Mitnehmerelements 204 in Eingriff mit einem Innengewinde 224 der Gewindehülse 206.

Das Mitnehmerelement 204 umfasst ferner einen dem Gewindeabschnitt 222 abgewandten Hinterschneidungsabschnitt 226 sowie einen den Hinterschneidungsabschnitt 226 mit dem Gewindeabschnitt 222 verbindenden Verbindungsabschnitt 228.

Das Keilelement 188 weist an seinem dem Mitnehmerelement 204 zugewandten Ende einen Schlitz 230 auf, welcher von dem Verbindungsabschnitt 228 des Mitnehmerelements 204 durchsetzt wird, wobei der Hinterschneidungsabschnitt 226 sich in einer der Durchtrittsöffnungen 194 des Keilelements 188 befindet.

Das Mitnehmerelement 204 ist somit derart an dem Keilelement 188 eingehängt, dass es in der Bewegungsrichtung 196 im Wesentlichen spielfrei mit dem Keilelement 188 gekoppelt ist.

Außerdem liegt der Verbindungsabschnitt 228 mit zwei seiner Seitenflächen an einander gegenüberliegenden Begrenzungsflächen des Schlitzes 230 an, so dass das Mitnehmerelement 204 gegen eine Verdrehung relativ zu dem Keilelement 188 und damit relativ zu der Basis 118 gesichert ist.

Bei einer Drehung der Gewindehülse 206 des Betätigungselements 202 wird daher das Mitnehmerelement 204 nicht gedreht, sondern längs der Bewegungsrichtung 196 linear verschoben, wodurch auch das Keilelement 188 längs der Bewegungsrichtung 196 verschoben wird.

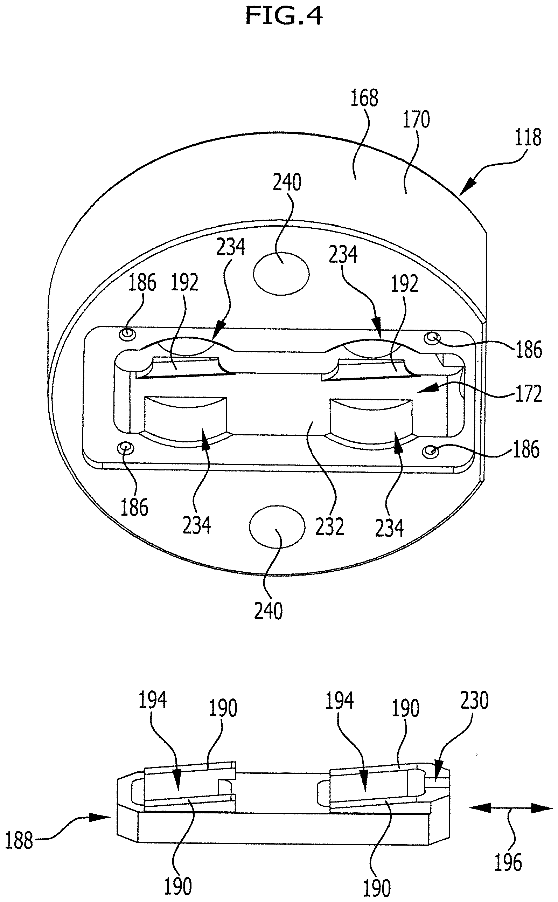

Wie am besten aus Fig. 4 zu ersehen ist, sind an den Seitenwänden 232 der Ausnehmung 172 in dem Grundkörper 168 im Wesentlichen zylinderabschnittsförmige Aufnahmen 234 vorgesehen, welche jeweils einen Abschnitt einer Mutter 142 eines der Klammerelemente 136 aufnehmen, so dass die Muttern 142 und somit die Klammerelemente 136 gegen eine Verschiebung längs der Bewegungsrichtung 196 des Keilelements 188 gesichert sind.

Zum Festlegen der Ausgleichsvorrichtung 116 an dem Untergrund 108, beispielsweise an einem Maschinentisch 110 oder einer Spannplatte, umfasst die Ausgleichsvorrichtung 116 ferner einen Fußteil 236 (siehe Fig. 1), welcher einstückig mit dem Grundkörper 168 ausgebildet oder als ein von dem Grundkörper 168 der Basis 118 separat hergestelltes Bauteil ausgebildet sein kann.

Im letzteren Fall ist der Grundkörper 168 mittels (nicht dargestellter) Befestigungsmittel, beispielsweise Befestigungsschrauben, lösbar mit dem Fußteil 236 verbunden, wobei die Befestigungsmittels sich durch Befestigungsmittel-Durchtrittsöffnungen 238 in dem Grundkörper 168 in (nicht dargestellte) Gewindelöcher, die an dem Fußteil 236 vorgesehen sind, hinein erstrecken.

Die Befestigungsmittel erstrecken sich ferner durch Durchtrittsöffnungen 240 in der Trägerscheibe 146 und durch Ausnehmungen 242 in der Abdeckung 158 des Trägers 120 hindurch, wobei Schraubenköpfe der Befestigungsmittel in den Durchtrittsöffnungen 240 und den Ausnehmungen 242 aufgenommen sind, damit die Arbeitsvorrichtung 124, insbesondere die Spannvorrichtung 102, mit Ihrer Unterseite flächig auf die Anlagefläche 166 an der Oberseite der Abdeckung 158 aufgesetzt werden kann.

Das Fußteil 236 der Ausgleichsvorrichtung 116 kann einen oder mehrere Führungskanäle 244 aufweisen, in denen jeweils ein Verankerungselement 246 längs einer Längsrichtung des betreffenden Führungskanals 244 verschieblich geführt ist.

Jedes Verankerungselement 246 kann beispielsweise eine Verankerungsschraube 248 umfassen, welche eine Durchtrittsöffnung in einer Unterlegscheibe 250 und den Führungskanal 244 durchsetzt und in eine (nicht dargestellte) T-Nuten-Mutter eingeschraubt ist, welche in einer der T-Nuten 106 des Maschinentisches 110 oder einer Spannplatte angeordnet ist, um die Ausgleichsvorrichtung 116 an dem Maschinentisch 110 beziehungsweise an der Spannplatte festzulegen.

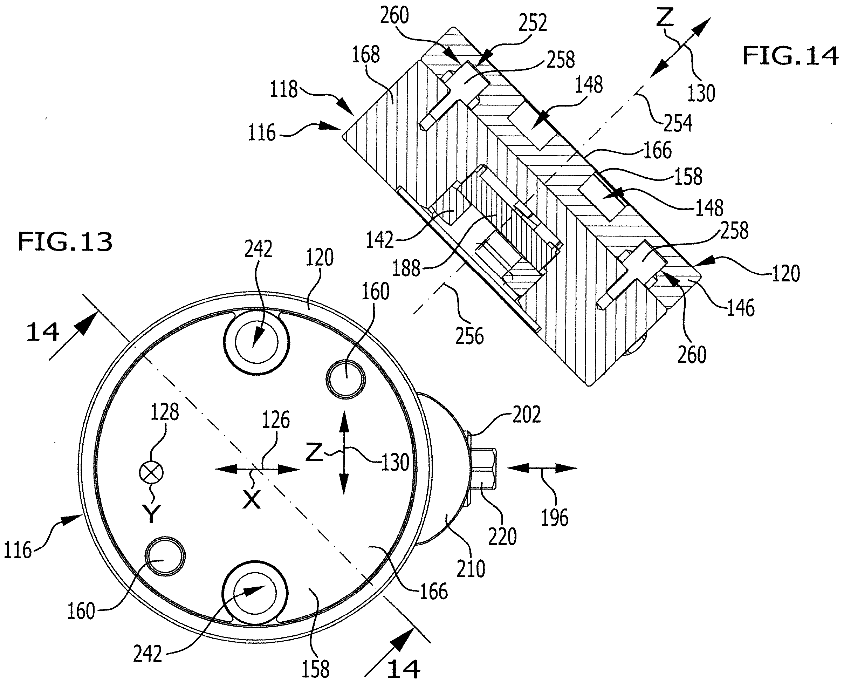

Wie am besten aus den Fig. 13 und 14 zu ersehen ist, umfasst die Ausgleichsvorrichtung 116 ferner eine Rückstellvorrichtung 252, mittels welcher der Träger 120 relativ zu der Basis 118 in die in Fig. 14 dargestellte Ausgangsposition zurückstellbar ist, in welcher der Träger 120 an der Basis 118 zentriert ist, so dass insbesondere eine senkrecht zur Verschiebeebene (X-Y-Ebene) der Ausgleichsvorrichtung 116 ausgerichtete Mittelachse 254 des Trägers 120 mit einer ebenfalls senkrecht zur Verschiebeebene (X-Y-Ebene) und parallel zur Z-Richtung der Ausgleichsvorrichtung 116 ausgerichteten Mittelachse 256 der Basis 118 zusammenfällt (siehe Fig. 14).

Eine solche Rückstellvorrichtung 252 kann beispielsweise ein oder mehrere Rückstellelemente 258 umfassen, welche an der Basis 118 oder an dem Träger 120 gehalten sind und sich in eine Rückstellausnehmung 260 an dem jeweils anderen Bauteil, also an dem Träger 120 beziehungsweise an der Basis 118, hinein erstrecken.

Wenn der Träger 120 relativ zu der Basis 118 aus der Ausgangsposition heraus längs der Verschiebeebene (X-Y-Ebene) verschoben wird, so werden die Rückstellelemente 258, vorzugsweise im Wesentlichen elastisch, verformt, so dass eine, vorzugsweise elastische, Rückstellkraft erzeugt wird, welche so gerichtet ist, dass der Träger 120 nach Lösen seiner Arretierung an der Basis 118 in die Ausgangsposition zurückbewegt wird.

Ein solches Rückstellelement 258 kann insbesondere ein Elastomermaterial umfassen oder ganz aus einem Elastomermaterial gebildet sein.

Die vorstehend beschriebene Ausgleichsvorrichtung 116 funktioniert wie folgt:
Um eine Positionierungstoleranz einer an der Ausgleichsvorrichtung 116 positionierten Arbeitsvorrichtung 124 oder einer noch an der Ausgleichsvorrichtung 116 zu positionierenden Arbeitsvorrichtung 124, beispielsweise einer Spannvorrichtung 102, auszugleichen, wird die Ausgleichsvorrichtung 116 in den in Fig. 5 dargestellten geöffneten Zustand überführt, indem das Betätigungselement 102, beispielsweise mittels eines an dem Betätigungskopf 220 angreifenden Mehrkantschlüssels, in der Öffnungsrichtung, beispielsweise im Gegenuhrzeigersinn, gedreht wird, was zur Folge hat, dass das Mitnehmerelement 204 und das damit gekoppelte Keilelement 188 längs der Bewegungsrichtung 196 der Bewegungsvorrichtung 198 in einer Öffnungsrichtung 262 (siehe Fig. 5) bewegt werden, welche im dargestellten Ausführungsbeispiel von dem Keilelement 188 nach außen zu dem Betätigungselement 202 hin gerichtet ist.

Durch diese Bewegung des Keilelements 188 in der Öffnungsrichtung 262 werden die keilelementseitigen Keilflächen 190 von den jeweils zugeordneten basisseitigen Keilflächen 192 abgezogen, das heißt relativ zu den basisseitigen Keilflächen 192 so bewegt, dass die Gesamthöhe der von den Klammerelementen 136 umklammerten Elemente, nämlich des Keilelements 188, des Grundkörpers 168 und der Trägerscheibe 146, in dem zwischen der jeweiligen Mutter 142 und dem Bolzenkopf 154 des jeweiligen Zugbolzens 138 liegenden Bereich verringert wird.

Hierdurch werden die Zugbolzen 138 entspannt, und die Verklemmung des Trägers 120 an der Basis 118 wird aufgehoben, so dass in dem geöffneten Zustand der Ausgleichsvorrichtung 116 der Träger 120 relativ zu der Basis 118 längs der Verschiebeebene (X-Y-Ebene) verschiebbar ist.

Der Träger 120 kann somit in dieser geöffneten Stellung aus der Ausgangsposition, in welche der Träger 120 durch die Rückstellvorrichtung 252 vorgespannt wird, längs der ersten Verschieberichtung 126 (X-Richtung) und/oder längs der zweiten Verschieberichtung 128 (Y-Richtung) so weit verschoben werden, wie dies das Spiel der Zugbolzen 138 in ihren Aufnahmebohrungen 148 zulässt.

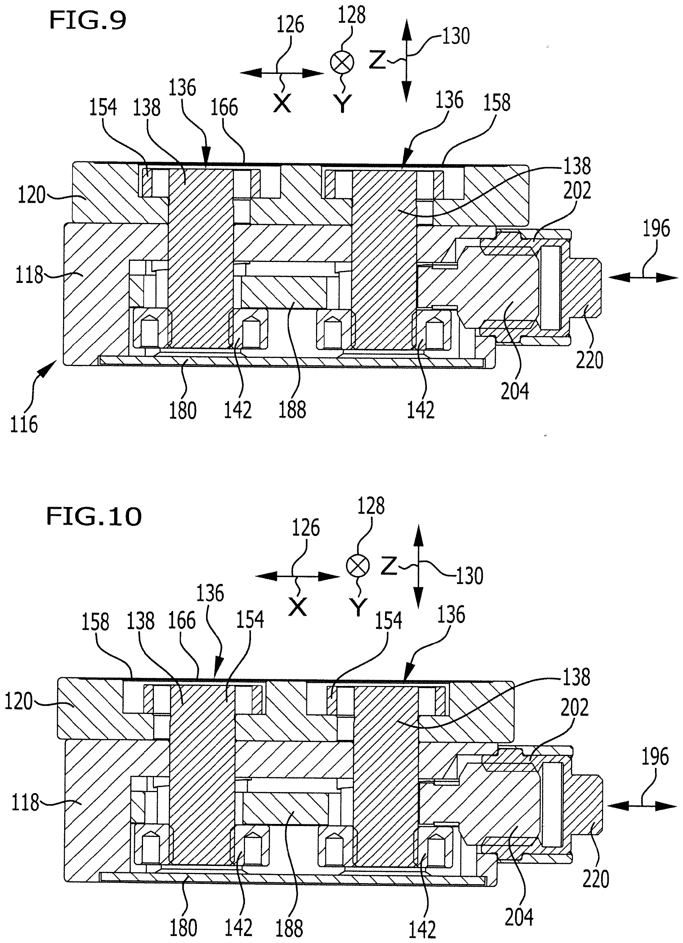

So ist in Fig. 9 ein Zustand der Ausgleichsvorrichtung 116 dargestellt, in welcher der Träger 120 relativ zu der Basis 118 in der ersten Verschieberichtung 126 (X-Richtung) maximal zu dem Betätigungselement 202 hin (in Fig. 9 nach rechts) verschoben ist.

In Fig. 10 ist ein Zustand der Ausgleichsvorrichtung 116 dargestellt, in welcher der Träger 120 relativ zu der Basis 118 in der ersten Verschieberichtung 126 (X-Richtung) maximal von dem Betätigungselement 202 weg (in Fig. 10 nach links) verschoben ist.

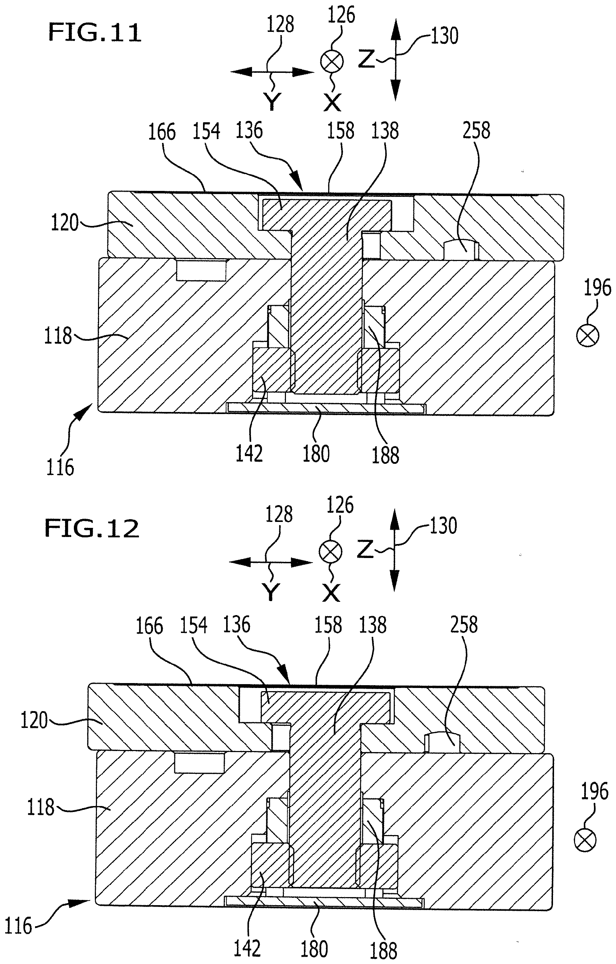

In Fig. 11 ist ein Zustand der Ausgleichsvorrichtung 116 dargestellt, in welcher der Träger 120 relativ zu der Basis 118 in der zweiten Verschieberichtung 128 (Y-Richtung) maximal nach rechts verschoben ist.

In Fig. 12 ist ein Zustand der Ausgleichsvorrichtung 116 dargestellt, in welcher der Träger 120 relativ zu der Basis 118 längs der zweiten Verschieberichtung 128 (Y-Richtung) maximal nach links verschoben ist.

Das Ausmaß der jeweiligen Verschiebung längs der ersten Verschieberichtung 126 (X-Richtung) und/oder längs der zweiten Verschieberichtung 128 (Y-Richtung) wird dabei so gewählt, dass die an dem Träger 120 festgelegte Arbeitsvorrichtung 124 beziehungsweise die an dem Träger 120 noch festzulegende Arbeitsvorrichtung 124 in der gewünschten Weise relativ zu dem Untergrund 108, beispielsweise dem Maschinentisch 110 oder einer Spannplatte, und damit relativ zu den anderen Arbeitsvorrichtungen 124 der Spannbaugruppe 100 positioniert ist.

In dieser gewünschten Arbeitsposition wird der Träger 120 relativ zu der Basis 118 arretiert, indem die Ausgleichsvorrichtung 116 in den in den Fig. 6, 8 und 9 bis 12 dargestellten gespannten Zustand überführt wird.

Dies erfolgt dadurch, dass das Betätigungselement 202 mittels eines geeigneten Werkzeugs, beispielsweise eines Mehrkantschlüssels, in der Spannrichtung gedreht wird, beispielsweise im Uhrzeigersinn, so dass das Mitnehmerelement 204 und das damit gekoppelte Keilelement 188 längs der Bewegungsrichtung 196 in einer Spannrichtung 264 bewegt wird, beispielsweise in der Richtung von dem Betätigungselement 202 weg.

Hierdurch werden die keilelementseitigen Keilflächen 190 auf die basisseitigen Keilflächen 192 aufgeschoben, das heißt so relativ zu den basisseitigen Keilflächen 192 bewegt, dass die Gesamthöhe der von den Klammerelementen 136 umklammerten Elemente, nämlich des Keilelements 188, des Grundkörpers 168 und der Trägerscheibe 146, in dem zwischen dem Bolzenkopf 154 des jeweiligen Zugbolzens 138 und der Mutter 142 des jeweiligen Klammerelements 136 liegenden Bereich zunimmt.

Hierdurch werden die Zugbolzen 138 über die Keilwirkung der Keilflächen 190, 192 nach unten gezogen und gespannt, wodurch der Träger 120 an der Basis 118 verklemmt wird und in der Arbeitsposition relativ zu der Basis 118 arretiert ist.

Wenn die Arbeitsvorrichtung 124, beispielsweise eine Spannvorrichtung 102, während des Einstellens der Arbeitsposition des Trägers 120 an der Basis 118 der Ausgleichsvorrichtung 116 noch nicht an dem Träger 120 montiert war, wird nun die Arbeitsvorrichtung 124 auf die Anlagefläche 166 der Ausgleichsvorrichtung 116 aufgesetzt und durch Einschrauben der Befestigungsschrauben in die Gewindelöcher 162 des Trägers 120 an dem Träger 120 der Ausgleichsvorrichtung 116 festgelegt.

Anschließend kann mit der Spannvorrichtung 102 und insbesondere mit der gesamten Spannbaugruppe 100 ein mit Einzugsnippeln versehenes Werkstück oder eine mit Einzugsnippeln versehene Werkstückpalette eingespannt werden, um einen Bearbeitungsvorgang, beispielsweise eine spanende Bearbeitung, an einem oder an mehreren Werkstücken durchzuführen.

Um die Ausgleichsvorrichtung 116 nach dem Abnehmen der Werkstückpalette beziehungsweise des Werkstücks von der Spannbaugruppe 100 wieder in den Ausgangszustand zu überführen, wird die Ausgleichsvorrichtung 116 wieder in den in den Fig. 5 und 7 dargestellten geöffneten Zustand überführt, indem das Betätigungselement 210 mittels eines geeigneten Werkzeugs, beispielsweise eines Mehrkantschlüssels, in der Öffnungsrichtung, beispielsweise im Gegenuhrzeigersinn, gedreht wird, was eine lineare Bewegung des Mitnehmerelements 204 und des Keilelements 188 in der Öffnungsrichtung 262 zur Folge hat, wodurch die Zugbolzen 138 der Klemmvorrichtung 134 entspannt werden und die Arretierung des Trägers 120 an der Basis 118 gelöst wird.

Nach dem Lösen der Arretierung bewegt die Rückstellvorrichtung 252 aufgrund der elastischen Rückstellkraft der Rückstellelemente 258 den Träger 120 in die in Fig. 14 dargestellte Ausgangsposition relativ zu der Basis 118 zurück.

Nun kann eine neue Arbeitsposition des Trägers 120 relativ zu der Basis 118 eingestellt und durch Drehung des Betätigungselements 202 in der Spannrichtung, beispielsweise im Uhrzeigersinn, in der neuen Arbeitsposition arretiert werden.

Alternativ zu der vorstehend beschriebenen und zeichnerisch dargestellten Bewegungsvorrichtung 198 kann auch vorgesehen sein, dass die Ausgleichsvorrichtung 116 eine pneumatische, hydraulische oder elektromotorische Bewegungsvorrichtung zum Erzeugen einer linearen Bewegung des Keilelements 188 umfasst.

Eine pneumatische oder hydraulische Bewegungsvorrichtung kann insbesondere einen mit dem Keilelement 188 gekoppelten Kolben umfassen, welcher in einem mit einem Druckfluid beaufschlagbaren Zylinder verschieblich geführt ist.

Bei einer modifizierten Ausführungsform einer Ausgleichsvorrichtung 116 kann auch vorgesehen sein, dass die Arretiervorrichtung 132 nur ein einziges Klammerelement 136, also vorzugsweise nur einen einzigen Zugbolzen 138 mit einer einzigen Mutter 142, umfasst.

## Patentansprüche

1. Ausgleichsvorrichtung zum Ausgleichen einer Positionierungstoleranz einer zu positionierenden Arbeitsvorrichtung (124), umfassend eine Basis (118) und einen Träger (120),
wobei der Träger (120) eine Befestigungseinrichtung (122) zum Befestigen der Arbeitsvorrichtung (124) an dem Träger (120) umfasst und der Träger (120) längs mindestens einer Verschieberichtung (126, 128) relativ zu der Basis (118) verschiebbar an der Basis (118) gehalten ist und wobei die Ausgleichsvorrichtung (116) eine Arretiervorrichtung (132) zum Arretieren des Trägers (120) in einer Arbeitsposition relativ zu der Basis (118) umfasst,
**dadurch gekennzeichnet,**
**dass** die Ausgleichsvorrichtung (116) mindestens einen Zugbolzen (138) und eine daran angeordnete Mutter (142) zum Verklemmen von Träger (120) und Basis (118) umfasst,
wobei der Träger (120) mindestens eine Aufnahmebohrung (148) aufweist, in welcher der Zugbolzen (138) mit Spiel aufgenommen ist, wobei die Arretiervorrichtung (132) eine Klemmvorrichtung (134) zum Verklemmen des Trägers (120) an der Basis (118) umfasst und
wobei die Klemmvorrichtung (134) mindestens ein Keilelement (188) umfasst.

2. Ausgleichsvorrichtung nach Anspruch 1, **dadurch gekennzeichnet, dass** der Träger (120) längs mindestens zwei senkrecht zueinander ausgerichteten, zusammen eine Verschiebeebene aufspannenden Verschieberichtungen (126, 128) relativ zu der Basis (118) verschiebbar ist.

3. Ausgleichsvorrichtung nach einem der Ansprüche 1 oder 2, **dadurch gekennzeichnet, dass** mindestens ein Keilelement (188) mindestens eine Keilfläche (190) mit einem Keilwinkel von weniger als 10° aufweist.

4. Ausgleichsvorrichtung nach einem der Ansprüche 1 bis 3, **dadurch gekennzeichnet, dass** die Klemmvorrichtung (134) eine Bewegungsvorrichtung (198) zum Erzeugen einer linearen Bewegung mindestens eines Keilelements (188) umfasst.

5. Ausgleichsvorrichtung nach Anspruch 4, **dadurch gekennzeichnet, dass** die Bewegungsvorrichtung (198) eine Wandlungsvorrichtung (200) zum Wandeln einer Drehbewegung eines Betätigungselements (202) in eine lineare Bewegung mindestens eines Keilelements (188) umfasst.

6. Ausgleichsvorrichtung nach einem der Ansprüche 1 bis 5, **dadurch gekennzeichnet, dass** die Ausgleichsvorrichtung (116) einen Fußteil (236) umfasst, mittels welchem die Ausgleichsvorrichtung (116) an einem Untergrund (108) festlegbar ist,
wobei vorzugsweise der Fußteil (236) mindestens einen Führungskanal (244) aufweist.

7. Ausgleichsvorrichtung nach einem der Ansprüche 1 bis 6, **dadurch gekennzeichnet, dass** die Basis (118) einen Grundkörper (168) umfasst, welcher eine zumindest abschnittsweise im Wesentlichen zylindrische Umfangsfläche (170) aufweist.

8. Ausgleichsvorrichtung nach einem der Ansprüche 1 bis 7, **dadurch gekennzeichnet, dass** die Befestigungseinrichtung (122) zum Befestigen der Arbeitsvorrichtung (124) an dem Träger (120) mindestens ein Gewindeloch (162) umfasst.

9. Ausgleichsvorrichtung nach einem der Ansprüche 1 bis 8, **dadurch gekennzeichnet, dass** der Träger (120) eine im Wesentlichen ebene Anlagefläche (166) zum Anlegen der Arbeitsvorrichtung (124) an den Träger (120) aufweist.

10. Kombination aus einer Ausgleichsvorrichtung (116) nach einem der Ansprüche 1 bis 9 und einer an dem Träger (120) befestigbaren oder befestigten Arbeitsvorrichtung (124),
wobei vorzugsweise die Arbeitsvorrichtung (124) eine Spannvorrichtung (102) zum Einspannen eines Werkstücks oder einer Werkstückpalette ist.

11. Kombination aus mehreren Arbeitsvorrichtungen (124) und mindestens einer Ausgleichsvorrichtung (116) nach einem der Ansprüche 1 bis 9.

12. Kombination nach Anspruch 11, wobei die Kombination ferner ein Werkstück oder eine Werkstückpalette umfasst, wobei das Werkstück beziehungsweise die Werkstückpalette an jede der mehreren Arbeitsvorrichtungen (124) angekoppelt ist.

## Claims

1. A compensation device for compensating for a positioning tolerance of an operating device (124) to be positioned, comprising a base (118) and a carrier (120),
wherein the carrier (120) comprises an attachment device (122) for attaching the operating device (124) to the carrier (120) and the carrier (120) is displaceably held on the base (118) along at least one displacement direction (126, 128) relative to the base (118) and wherein the compensation device (116) comprises a locking device (132) for locking the carrier (120) in an operating position relative to the base (118),
**characterised in that**
the compensation device (116) comprises at least one tension bolt (138) and a nut (142) arranged thereon for jamming together carrier (120) and base (118),
wherein the carrier (120) has at least one receiving bore (148), in which the tension bolt (138) is received with play,
wherein the locking device (132) comprises a clamping device (134) for jamming the carrier (120) to the base (118) and
wherein the clamping device (134) comprises at least one wedge element (188).

2. A compensation device according to claim 1, **characterised in that** the carrier (120) is displaceable relative to the base (118) along at least two mutually perpendicularly oriented displacement directions (126, 128) which together span a displacement plane.

3. A compensation device according to either of claims 1 or 2,
**characterised in that** at least one wedge element (188) has at least one wedge surface (190) with a wedge angle of less than 10°.

4. A compensation device according to any one of claims 1 to 3,
**characterised in that** the clamping device (134) comprises a movement device (198) for producing a linear movement of at least one wedge element (188).

5. A compensation device according to claim 4, **characterised in that** the movement device (198) comprises a converting device (200) for converting a rotary movement of an actuating element (202) into a linear movement of at least one wedge element (188).

6. A compensation device according to any one of claims 1 to 5, **characterised in that** the compensation device (116) comprises a foot part (236), by means of which the compensation device (116) is fixable to a substrate (108),
wherein preferably the foot part (236) has at least one guidance channel (244).

7. A compensation device according to any of claims 1 to 6, **characterised in that** the base (118) comprises a base body (168), which has a peripheral face (170) which is substantially cylindrical at least in portions.

8. A compensation device according to any of claims 1 to 7, **characterised in that** the attachment device (122) comprises at least one threaded hole (162) for attaching the operating device (124) to the carrier (120).

9. A compensation device according to any of claims 1 to 8, **characterised in that** the carrier (120) has a substantially flat contact face (166) for placing the operating device (124) on the carrier (120).

10. A combination of a compensation device (116) according to any one of claims 1 to 9 and an operating device (124) attachable or attached to the carrier (120),
wherein preferably the operating device (124) is a clamping device (102) for clamping a workpiece or a workpiece pallet.

11. A combination of a plurality of operating devices (124) and at least one compensation device (116) according to any one of claims 1 to 9.

12. A combination according to claim 11, wherein the combination further comprises a workpiece or a workpiece pallet, wherein the workpiece or the workpiece pallet respectively is coupled to each of the plurality of operating devices (124).

## Revendications

1. Dispositif de compensation pour compenser une tolérance de positionnement d'un dispositif de travail (124) à positionner, comprenant une base (118) et un support (120),
dans lequel le support (120) comprend un système de fixation (122) pour fixer le dispositif de travail (124) sur le support (120) et le support (120) est retenu sur la base (118) de manière à pouvoir coulisser le long d'au moins une direction de coulissement (126, 128) par rapport à la base (118) et dans lequel le dispositif de compensation (116) comprend un dispositif de blocage (132) pour bloquer le support (120) dans une position de travail par rapport à la base (118),
**caractérisé en ce**
**que** le dispositif de compensation (116) comprend au moins un boulon de traction (138) et un écrou (142) disposé sur celui-ci pour coincer le support (120) et la base (118),
dans lequel le support (120) présente au moins un trou de réception (148), dans lequel le boulon de traction (138) est reçu avec un jeu,
dans lequel le dispositif de blocage (132) comprend un dispositif de serrage (134) pour coincer le support (120) sur la base (118) et
dans lequel le dispositif de serrage (134) comprend au moins un élément cunéiforme (188).

2. Dispositif de compensation selon la revendication 1, **caractérisé en ce que** le support (120) peut coulisser par rapport à la base (118) le long d'au moins deux directions de coulissement (126, 128) orientées perpendiculairement l'une à l'autre, sous-tendant conjointement un plan de coulissement.

3. Dispositif de compensation selon l'une quelconque des revendications 1 ou 2, **caractérisé en ce qu'**au moins un élément cunéiforme (188) présente au moins une surface cunéiforme (190) avec un angle de coin inférieur à 10°.

4. Dispositif de compensation selon l'une quelconque des revendications 1 à 3, **caractérisé en ce que** le dispositif de serrage (134) comprend un dispositif de déplacement (198) pour produire un mouvement linéaire d'au moins un élément cunéiforme (188).

5. Dispositif de compensation selon la revendication 4, **caractérisé en ce que** le dispositif de déplacement (198) comprend un dispositif de conversion (200) pour convertir un mouvement rotatif d'un élément d'actionnement (202) en un mouvement linéaire d'au moins un élément cunéiforme (188).

6. Dispositif de compensation selon l'une quelconque des revendications 1 à 5, **caractérisé en ce que** le dispositif de compensation (116) comprend une partie pied (236), au moyen de laquelle le dispositif de compensation (116) peut être fixé sur un sol (108),
dans lequel de préférence la partie pied (236) présente au moins un canal de guidage (244).

7. Dispositif de compensation selon l'une quelconque des revendications 1 à 6, **caractérisé en ce que** la base (118) comprend un corps de base (168), lequel présente une surface périphérique (170) sensiblement cylindrique au moins sur certaines parties.

8. Dispositif de compensation selon l'une quelconque des revendications 1 à 7, **caractérisé en ce que** le système de fixation (122) pour fixer le dispositif de travail (124) sur le support (120) comprend au moins un trou fileté (162).

9. Dispositif de compensation selon l'une quelconque des revendications 1 à 8, **caractérisé en ce que** le support (120) présente une surface d'appui (166) sensiblement plane pour placer le dispositif de travail (124) sur le support (120).

10. Combinaison d'un dispositif de compensation (116) selon l'une quelconque des revendications 1 à 9 et d'un dispositif de travail (124) pouvant être fixé ou fixé sur le support (120),
dans laquelle de préférence le dispositif de travail (124) est un dispositif de serrage (102) pour serrer une pièce ou une palette porte-pièce.

11. Combinaison de plusieurs dispositifs de travail (124) et d'au moins un dispositif de compensation (116) selon l'une quelconque des revendications 1 à 9.

12. Combinaison selon la revendication 11, dans laquelle la combinaison comprend en outre une pièce ou une palette porte-pièce, dans laquelle la pièce ou la palette porte-pièce est accouplée à chacun des plusieurs dispositifs de travail (124).
